# EUROPEAN PATENT APPLICATION

(11) **EP 2 442 593 A2**
(43) Date of publication of application: **18.04.2012**
(21) Application number: 10786368.0
(22) Date of filing: 09.06.2010
(51) Int. Cl.: H04W 4/08, H04W 84/18, H04W 88/02

(54) **NETWORK PARTICIPATION METHOD BASED ON A USER COMMAND, AND GROUPS AND DEVICE ADOPTING SAME**

(30) Priority: 09.06.2009 KR 20090050849; 25.06.2009 KR 20090056935; 24.12.2009 KR 20090130912
(71) Applicant: Samsung Electronics Co., Ltd., Suwon-si, Gyeonggi-do 442-742 (KR)
(72) Inventor: HAN, Kuk-hyun, Suwon-si Gyeonggi-do 443-769 (KR); HAN, Sang-jun, Seoul 137-071 (KR); KIM, Hark-joon, Hwaseong-si Gyeonggi-do 445-982 (KR)
(74) Representative: Harrison Goddard Foote
(86) International application number: PCT/KR2010/003702
(87) International publication number: WO 2010/143885

(57) **Abstract**

A method for joining a network according to a user command and an associated group and a device using the same are provided. The method includes, if it is determined that a command to join a network is input by a user, joining a network which will be formed along with another device that receives a command to join a network and belongs to a group relevant to a group of the device, among other devices existing around the device. Accordingly, it is not necessary to search for devices to join to a network one by one and thus a network is formed more easily.

## Description

### [Technical Field]

Systems and methods consistent with the present invention relate to a method for joining a network and a device using the same, and more particularly, to a method for joining and forming a network with other devices.

### [Background Art]

With the development of network technology, users are able to form a single network using their own devices and mutually exchange information through the network.

In order to form such a network, a user of a device, which intends to serve as a host, should go through a difficult and complicated process, such as inputting a scan command into the device to search for other devices in a surrounding area and selecting a device to serve as a guest from the searched devices.

Due to this difficulty, users do not utilize such a convenient function and even a user who well knows the above process tends to avoid using the function.

### [Disclosure]

### [Technical Problem]

An exemplary embodiment of the present invention provides a method for joining a network according to a user command an associated group, which can save a user the inconvenience of having to search for devices one by one in order to form a network and thus can allow the user to form a network more easily, and a device using the same.

### [Technical Solution]

According to an aspect of the present invention, there is provided a method for joining a network of a device, the method comprising determining whether a command to join a network is input by a user, and, if it is determined that the command to join a network is input, joining a network which will be formed along with another device that receives a command to join a network and belongs to a group relevant to a group of the device, among other devices existing around the device.

The joining the network may comprise, after it is determined that the command to join a network is input and then if it is determined that the another device does not exist around the device, joining the network as a host.

The joining the network may further comprise, after the joining the network as the host, detecting another device that receives a command to join a network and belongs to a group relevant to a group of the device among other devices existing around the device, and allowing the detected another device to join the network as a guest.

The detecting and the allowing the another device to join the network as the guest may be repeated until a specific time.

The specific time may be at least one of a time at which input of the command to join a network from the user is released, a time at which a predetermined time elapses, and a time at which a predetermined number of guests joins the network. The predetermined number may be greater than 1.

The joining the network may further comprise, after the joining the network as the host, allowing another device of a group that has no relevance to a group of the device among other devices existing around the device to join the network as a guest.

The joining the network may further comprise, after the joining the network as the host, allowing another device of a group that has no relevance to a group of the device among other devices existing around the device to join the network as a guest, wherein a number of the another device is less than a predetermined number.

The another device of the group relevant to the group of the device may be a device that belongs to a same group as at least one group of the device.

The group of the device may be at least one group to which the device belongs or at least one group selected from groups to which the device belongs, and the group of the another device may be at least one group to which the another device belongs or at least one group selected from groups to which the another device belongs.

The command to join a network may be input through at least one of a physical user interface (PUI), a button, touch on a touch display, touch on a touch pad, a graphical user interface (GUI), gesture, and sound.

The command to join a network for the device may be input by the user, and the command to join a network for the another device may be input by another user or the user.

The method may further comprise performing a specific service along with the another device connected through the network.

The service may be performed by a device that serves as a host in the network and may comprise at least one of 1) transmitting a file among devices forming the network, 2) playing a game along with the devices, 3) transmitting a screen among the devices, and 4) exchanging data and control information with the devices. In above 1), the file may be transmitted from the host to the guest or vice versa.

The joining the network may comprise, after it is determined that the command to join a network is input, if it is determined that another device serving as a host in the network exists around the device, allowing the another device to join the network as a guest.

The device serving as the host may be a device into which the command to join a network is input first.

The group of the device may have no relevance to a group of the device serving as the host in the network, and the joining the network as the guest may comprise, if it is determined that there is permission from the device serving as the host in the network, joining the network as the guest.

The joining the network may comprise selecting a network to join by referring to priority of a group set in the device.

According to another aspect of the present invention, there is provided a device comprising a manipulator which receives a command to join a network from a user, a network interface which accesses a network which will be formed along with at least one of other devices existing around the device, and a controller which, if it is determined that the command to join a network is input through the manipulator, controls to join a network which will be formed with another device that receives a command to join a network and belongs to a group relevant to a group of the device among other devices existing around the device.

According to still another aspect of the present invention, there is provided a networking method comprising forming a network by devices of relevant groups among devices which receive a command to join a network from a user, and performing a service by at least two devices among the devices forming the network.

### [Advantageous Effects]

Accordingly, it is not necessary to search for devices to join to a network one by one and thus a network is formed more easily.

### [Description of Drawings]

FIG. 1 is a concept view to explain a method for forming a network by having devices join the network according to an exemplary embodiment;
FIG. 2 is a concept view to explain a method for forming a network according to another exemplary embodiment;
FIGS. 3 to 6 are concept views to explain a method for forming a network according to still another exemplary embodiment;
FIG. 7 is a concept view to explain a method for forming a network according to still another exemplary embodiment;
FIG. 8 is a concept view to explain a method for forming a network according to still another exemplary embodiment;
FIG. 9 is a flowchart illustrating a method for joining a network of a mobile phone according to still another exemplary embodiment;
FIG. 10 is a view to explain that a command to join a network can be input by pressing buttons in various positions or touching a touch display;
FIGS. 11 and 12 are concept views to explain a method for joining a network in which a mobile phone belonging to a different group is a host;
FIG. 13 is a view illustrating a table-top device and a mobile phone used in a digital conference to explain that the table-top device and the mobile phone can be used to form a network; and
FIG. 14 is a block diagram illustrating a device to which the present invention is applicable.

### [Best Mode]

### [Mode for Invention]

Reference will now be made in detail to the present exemplary embodiments of the present invention, examples of which are illustrated in the accompanying drawings, wherein like reference numerals refer to the like elements throughout. The exemplary embodiments are described below in order to explain the present invention by referring to the figures.

### 1. Embodiment #1

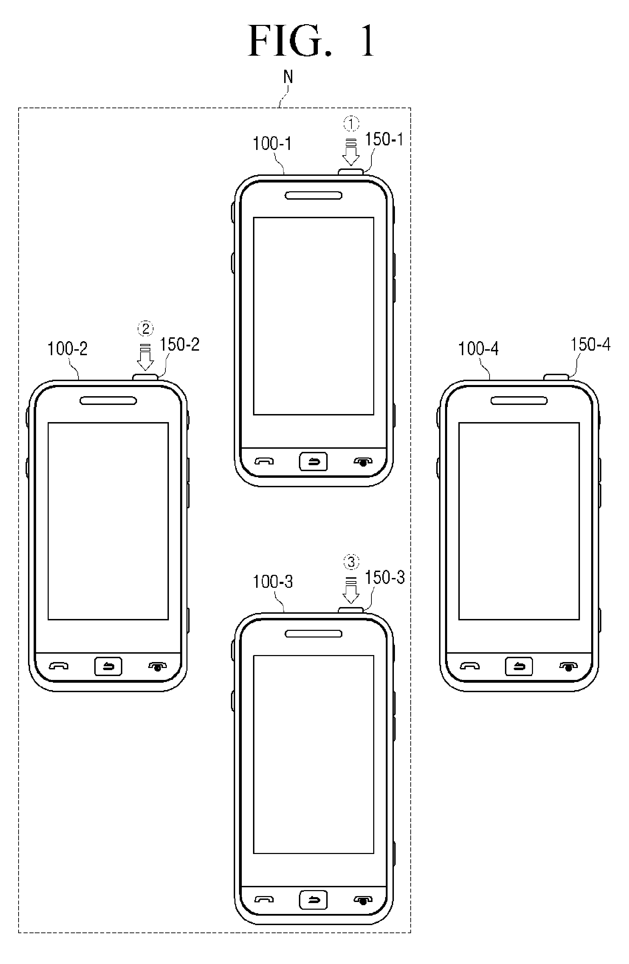

FIG. 1 is a concept view to explain a method for forming a network by having devices join the network according to an exemplary embodiment. FIG. 1 illustrates a plurality of mobile phones 100-1, 100-2, 100-3, and 100-4. The mobile phones 100-1, 100-2, 100-3, and 100-4 have link-buttons 150-1, 150-2, 150-3, and 150-4 formed on upper portions thereof.

Downward arrows (↓) are illustrated above the link-buttons 150-1, 150-2, and 150-3 of the mobile phones 100-1, 100-2, and 100-3. The downward arrows (↓) mean that the link-buttons 150-1, 150-2, and 150-3 under the downward arrows (↓) are pressed by users.

In other words, the link-button 150-1 is pressed by a user 1 of the mobile phone 100-1, the link-button 150-2 is pressed by a user 2 of the mobile phone 100-2, and the link-button 150-3 is pressed by a user 3 of the mobile phone 100-3.

The mobile phone the link-button of which is pressed is a mobile phone of a user who wishes to join a network. In other words, if a user wishes to join a network with his/her own mobile phone, the user inputs a command to join a network by pressing the link-button.

A network N is formed by the mobile phones 100-1, 100-2, and 200-3 the link-buttons 150-1, 150-2, and 150-3 of which are pressed by the users 1, 2, and 3. The mobile phone 100-4 does not join the network N since the link button 150-4 is not pressed by a user 4. In FIG. 1, the network N formed by the mobile phones 100-1, 100-2, and 100-3 is illustrated as dotted lines.

One of the mobile phones forming the network N serves as a host (master) and the remaining mobile phones serve as guests (slaves). The mobile phone the link-button of which is pressed by the user first joins the network N as a host and serves as a host. The mobile phones the link-buttons of which are pressed afterward join the network N as guests and serve as guests.

In FIG. 1, circled characters ① ②, ③ illustrated above the downward arrows (↓) indicate a temporal order in which the link-buttons are pressed. If the link-buttons are pressed in order of ① ②, ③ as shown in FIG. 1, the mobile phone 100-1 serves as a host and the mobile phones 100-2 and 100-3 serve as guests. The mobile phones 100-1, 100-2, and 100-3 forming the network N perform a service in a mutually connected state. The service may be 1) transmitting a file among the mobile phones 100-1, 100-2, and 100-3, 2) playing a game with the mobile phones 100-1, 100-2, and 100-3, 3) transmitting a screen among the mobile phones 100-1, 100-2, and 100-3 on a real-time basis, and 4) exchanging data and control information among the mobile phones 100-1, 100-2, and 100-3. In above 1), the file may be transmitted from the host to the guest or vice versa.

For example, one of files stored in the mobile phone 100-1 that is designated by the user 1 is transmitted to the mobile phones 100-2 and 100-3. The transmitting the screen on the real-time basis refers to transmitting a screen displayed on the mobile phone 100-1 to the mobile phones 100-2 and 100-3 on a real-time basis.

### 2. Embodiment #2

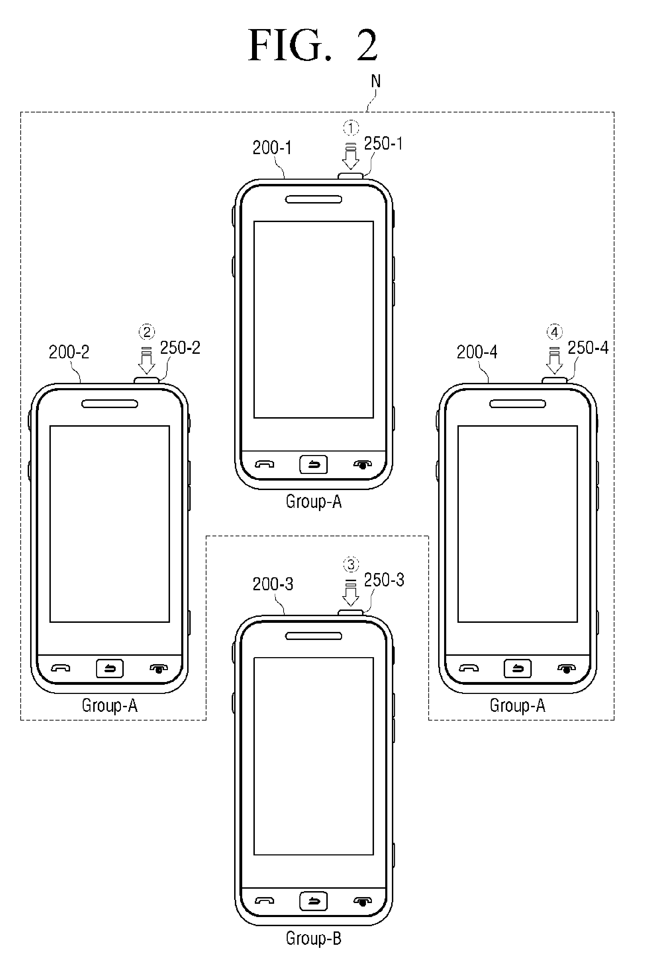

FIG. 2 is a concept view to explain a method for forming a network according to another exemplary embodiment. In the method of FIG. 2, a group to which a user of a mobile phone belongs is taken into consideration when forming a network. Hereinafter, a 'group to which a user of a mobile phone belongs' will be referred to as a 'group to which a mobile phone belongs' for convenience of explanation.

Like in FIG. 1, a plurality of mobile phones 200-1, 200-2, 200-3, and 200-4 having link-buttons 250-1, 250-2, 250-3, and 250-4 formed on upper portions thereof are illustrated in FIG. 2.

However, the mobile phones 200-1, 200-2, 200-3, and 200-4 illustrated in FIG. 2 differ from the mobile phones 100-1, 100-2, 100-3, and 100-4 illustrated in FIG. 1 in that they belong to specific groups.

Which group the mobile phones 200-1, 200-2, 200-3, and 200-4 belong to are expressed under each of the mobile phones 200-1, 200-2, 200-3, and 200-4. It can be seen from FIG. 2 that the mobile phones 200-1, 200-2, and 200-4 belong to a group A, whereas the mobile phone 200-3 belongs to a group B.

Like in FIG. 1, the mobile phones the link-buttons of which are pressed by users form a network. However, in FIG. 2, only the mobile phones belonging to the same group form the network.

More specifically, if a mobile phone does not belong to the same group as that of a host, the mobile phone is not allowed to join a network regardless of whether the link-button of the mobile phone is pressed or not. The host recited herein is a mobile phone a link button of which is pressed first.

According to the order of circled characters in FIG. 2, the mobile phone 200-1 is the host since the link-button 250-1 of the mobile phone 200-1 is pressed first. Among the mobile phones 200-2, 200-3, and 200-4 the link-buttons of which are pressed afterward, the mobile phones 200-2 and 200-4 are allowed to join the network N in which the mobile phone 200-1 serves as the host, since the mobile phones 200-2 and 200-4 belong to the same group A as that of the host mobile phone 200-1.

However, the mobile phone 200-3 is not allowed to join the network N in which the mobile phone 200-1 serves as the host, since the mobile phone 200-3 does not belong to the group A and belongs to the group B. However, the mobile phone 200-3 may be allowed to join another network for the group B as a host or guest.

### 3. Embodiment #3

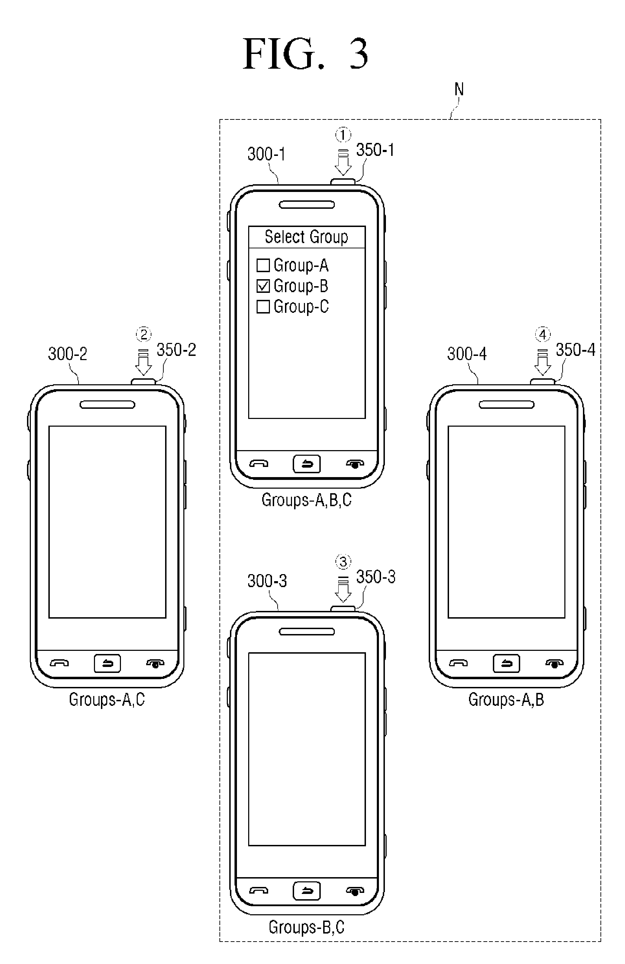

FIG. 3 is a concept view to explain a method for forming a network according to still another exemplary embodiment. The method for forming the network illustrated in FIG. 3 relates to a case in which mobile phones 300-1, 300-2, 300-3, and 300-4 belong to a plurality of groups.

The mobile phones 300-1, 300-2, 300-3, and 300-4 of FIG. 3 differ from the mobile phones 200-1, 200-2, 200-3, and 200-4 in that they belong to at least two groups.

More specifically, the mobile phone 300-1 belongs to groups A, B, and C, the mobile phone 300-2 belong to groups A and C, the mobile phone 300-3 belong to groups B and C, and the mobile phone 300-4 belongs to groups A and B.

In this embodiment, a user of a mobile phone which intends to serve as a host in a network should select a group as he/she wishes. This is to limit the number of guests which joins the network. In other words, the network illustrated in FIG. 3 consists of mobile phones that belong to the group selected by the user of the mobile phone which intends to serve as a host.

In FIG. 3, the mobile phone 300-1, which serves as a host, selects the group B and accordingly only the mobile phones 300-3 and 300-4, which belong to the group B, are allowed to join the network N as guests. Although the link-button 350-2 is pressed, the mobile phone 300-2 is not allowed to join the network since it does not belong to the group B.

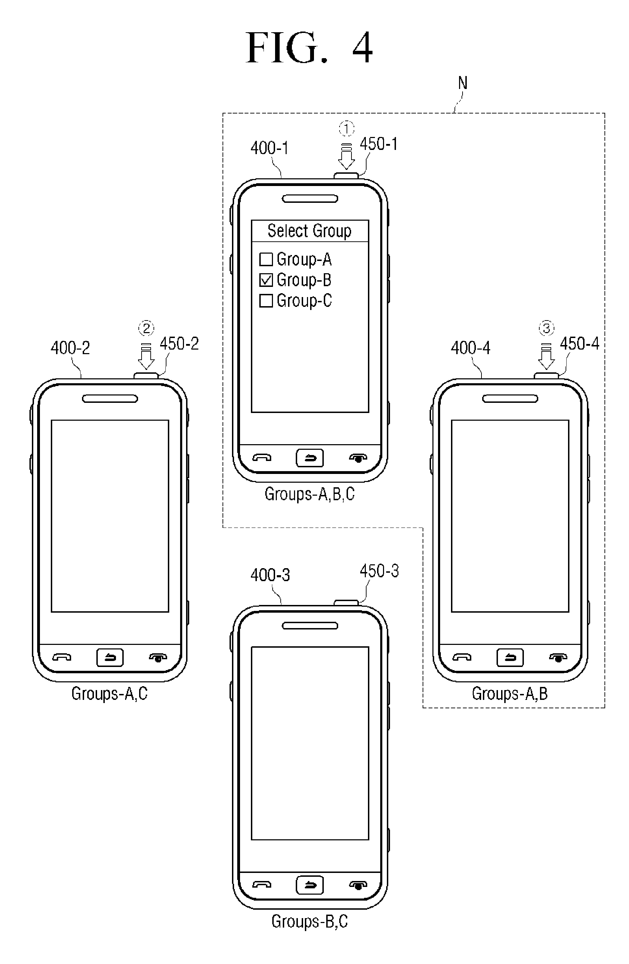

On the other hand, if the link-button is not pressed, the mobile phone is not allowed to join the network regardless of whether the mobile phone belongs to the group selected by the host. In other words, as shown in FIG. 4, a mobile phone 400-3 belongs to a group B selected by a host mobile phone 400-1 but a link button 450-3 is not pressed by a user 3. Therefore, the mobile phone 400-3 is not allowed to join a network N.

Also, there may be a case in which two or more groups are selected by a host. In this case, mobile phones belonging to at least one of the groups selected by the host are used in forming a network.

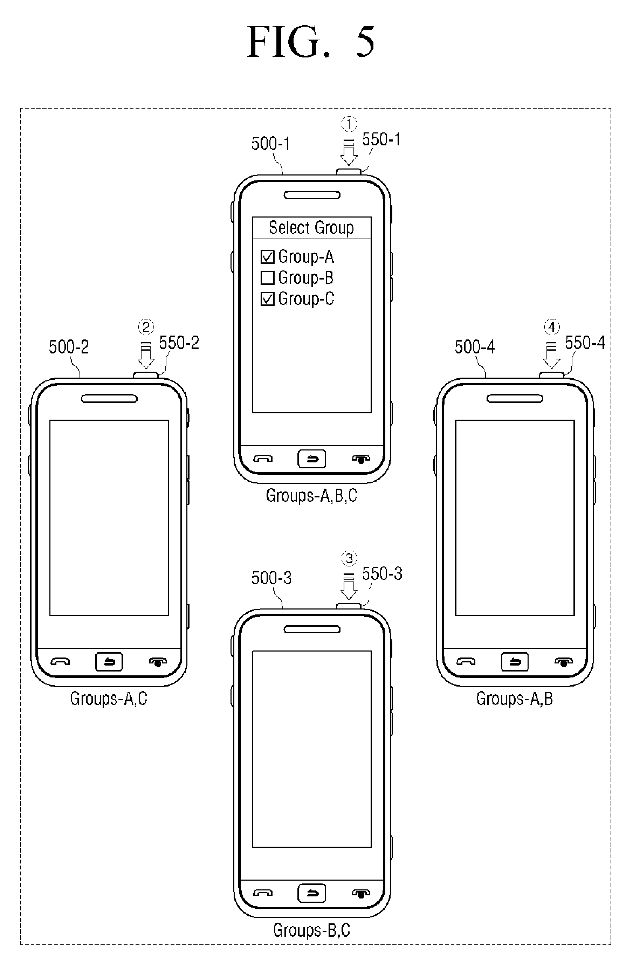

In FIG. 5, a host mobile phone 500-1 selects groups A and C. Therefore, mobile phones 500-2, 500-3, and 500-4 belonging to at least one of the groups A and C are allowed to join a network N.

Also, there may be a case in which two or more groups are selected by a host and a network is formed with mobile phones belonging to all of the selected groups.

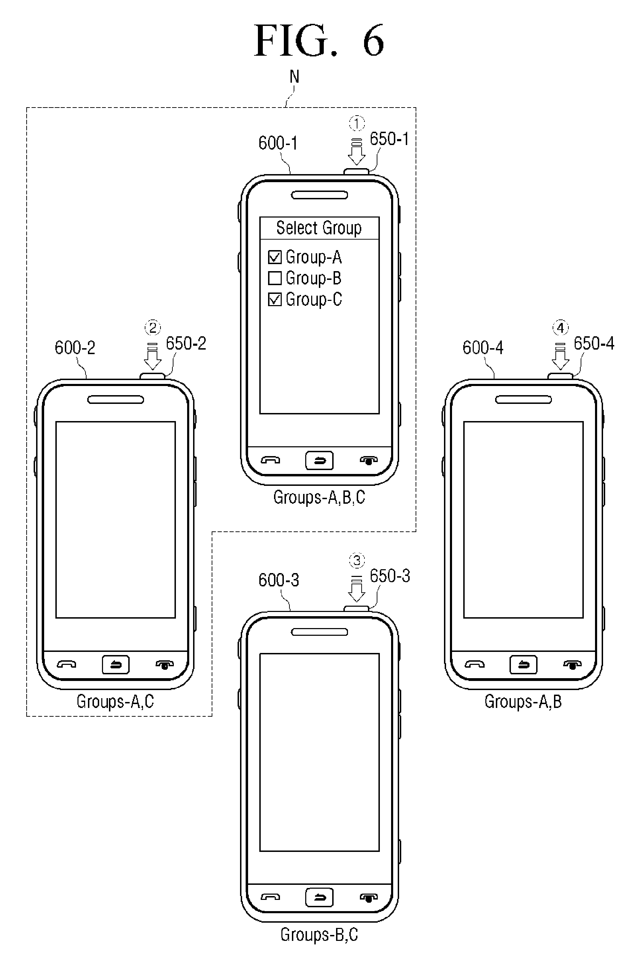

In FIG. 6, a host mobile phone 600-1 selects groups A and C and accordingly only a mobile phone 600-2 belonging to all of the groups A and C is allowed to join a network N.

### 4. Embodiment #4

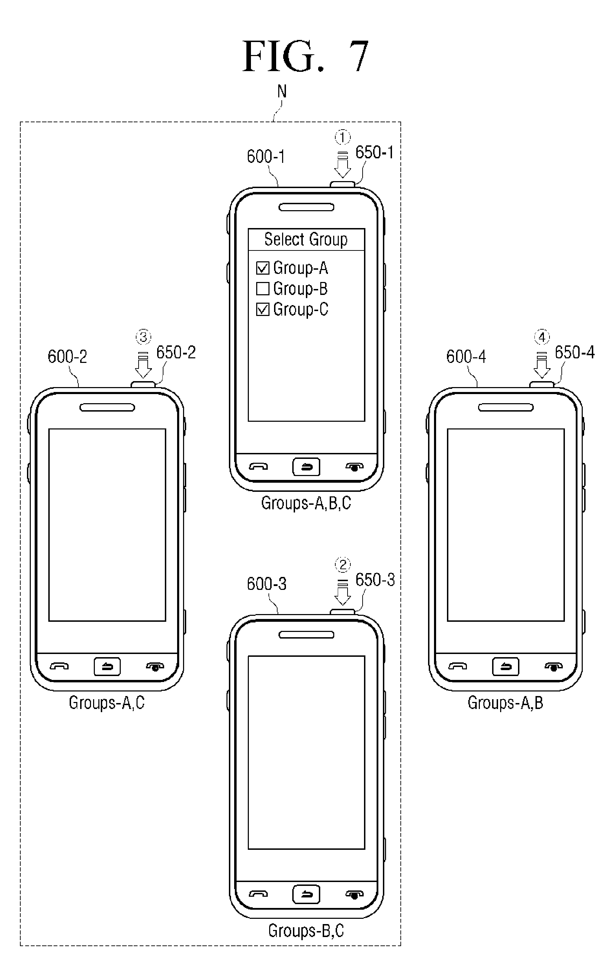

FIG. 7 is a concept view to explain a method for forming a network according to still another exemplary embodiment. In the method shown in FIG. 7, a group of mobile phones to form a network is determined by a host mobile phone and a mobile phone which joins as a guest first.

In FIG. 7, a host mobile phone 700-1 selects groups A and C and a mobile phone 700-3 which joins as a guest first belongs to groups B and C.

Therefore, a group of mobile phones to form a network is determined based on a common group of the groups selected by the host mobile phone 700-1 and the groups to which the first guest mobile phone 700-3 belongs. In FIG. 7, the common group is the group C.

Accordingly, a mobile phone 700-2 belonging to the group C is allowed to join the network. On the other hand, a mobile phone 700-4 which does not belong to the group C is not allowed to join the network.

### 5. Embodiment #5

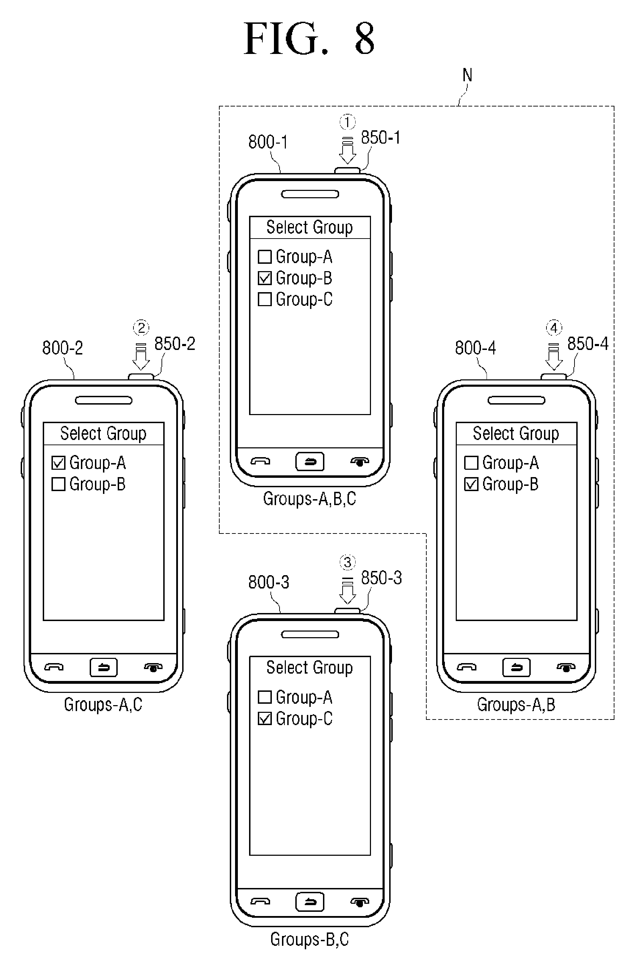

FIG. 8 is a concept view to explain a method for forming a network according to still another embodiment. In the method for forming the network illustrated in FIG. 8, not only a host mobile phone but also mobile phones to serve as guests select a group.

As shown in FIG. 8, a mobile phone 800-1 to serve as a host selects a group B and mobile phones 800-2, 800-3, and 800-4 to serve as guests select groups A, C, and B, respectively.

A mobile phone which will serve as a guest joins only a network that is formed by mobile phones of a group as selected by its user. Accordingly, in a network N in which the mobile phone 800-1 serving as a host selects the group B, only the mobile phone 800-4 is allowed to join and the mobile phones 800-2 and 800-3 are not allowed to join.

In particular, although the mobile phone 800-3 belongs to the group B, it is not allowed to join the network in which the mobile phone 800-1 serving as a host selects the group B. This is because a user 3 of the mobile phone 800-3 does not select the group B and selects the group C. However, the mobile phone 800-3 may be allowed to join another network that is formed by mobile phones belonging to the group C, as a host or guest.

### 6. Embodiment #6

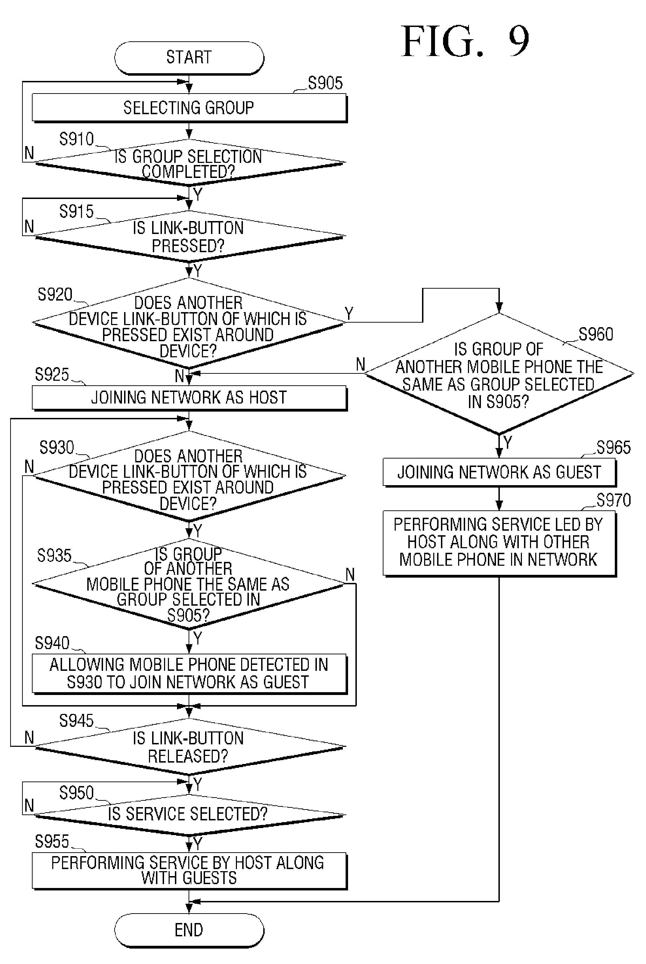

Hereinafter, a process in which the mobile phones 300-1 to 300-4, 400-1 to 400-4, 500-1 to 500-4, 600-1 to 600-4, 700-1 to 700-4, and 800-1 to 800-4 shown in FIGS. 3 to 8 join a network will be explained with reference to FIG. 9. FIG. 9 is a flowchart illustrating a method for joining a network of a mobile phone according to still another exemplary embodiment.

As shown in FIG. 9, a mobile phone receives a selection of at least one of groups to which it belongs from a user (S905). In operation S905, the group may be selected through a graphical user interface (GUI) provided on a display of the mobile phone for selecting a group.

If group selection in operation S905 is completed (5910-Y) and if a link-button of the mobile phone is pressed by the user (S915-Y), the mobile phone detects another mobile phone a link-button of which is pressed around the mobile phone (S920).

If there is no mobile phone a link-button of which is pressed around the mobile phone (S920-N), the mobile phone joins a network as a host (S925). Joining a network as a host in operation S925 means that the mobile phone newly forms a network to serve as a host.

On the other hand, if there is another mobile phone a link-button of which is pressed (S920-Y), but if a group of another mobile phone is not the same as selected in operation S905 (S960-N), the mobile phone joins the network as the host (S925).

The 'group of another mobile phone' recited herein refers to 1) a group to which another mobile phone belongs or 2) a group selected by a user of another mobile phone from groups to which another mobile phone belongs. For example, the 'group of another mobile phone' means "1)" in the case of FIGS. 3 to 6 and means "2)" in the case of FIG. 8. The same meaning of the 'group of another mobile phone 'is applied to operation S935, which will be described below.

The mobile phone which joins the network as the host in operation S925 detects another mobile phone a link-button of which is pressed around the mobile phone again (S930). Operation S930 is to detect a mobile phone which will join as a guest.

If there is another mobile phone a link-button of which is pressed (S930-Y), the mobile phone determines whether a group of another mobile phone is the same as selected in operation S905 (S935).

If the group of another mobile phone is the same as selected in operation S905 (S935-Y), the mobile phone allows the mobile phone detected in operation S930 to join the network as the guest (S940).

After that, operations S930 to 940 are repeated in order to allow still another mobile phone to join the network as a guest. Operations S930 and 940 are repeated until the link-button pressed in operation S915 is released (S945).

Accordingly, if the link-button is released (S945-Y), the mobile phone does not allow a guest mobile phone to join the network anymore.

After that, if one of available services is selected by the user (S950-Y), the mobile phone performs the service selected by the user along with the guest mobile phones joining the network (S955). In operation S950, the service may be selected by the user manually or automatically.

On the other hand, if there is another mobile phone a link-button of which is pressed around the mobile phone in operation S920 (S920-Y) and if the group of another mobile phone is the same as selected in operation S905 (S960-Y), the mobile phone joins the network as a guest (S965).

In the above case, the network in which the mobile phone having selected the same group as the group of another mobile phone serves as a host has been already established. Also, another mobile phone detected in operation S920 is a mobile phone serving as a host in another network. Accordingly, the mobile phone joins the network as a guest.

The mobile phone joining the network as a guest in operation S965 performs the service led by the host along with other mobile phone of the network (S970).

In the case of FIG. 2, operations S905 and 910 of FIG. 9 may be omitted and operations S935 and 960 may be modified to an operation to determine whether the 'group of another mobile phone detected in operations S930 and S920' is the same as the 'group of the mobile phone which detects another mobile phone'.

### 7. Variations

### (1) Inputting a command to join a network

In the above-described embodiments, a command to join a network is input by pressing the link-button provided on the upper portion of the mobile phone. The reason why the link-button is positioned on the upper portion of the mobile phone is that that position makes it easy to press the link-button with the user's thumb when the user grasps the mobile phone. Therefore, the link-button may be formed in any position that can help the user press the link-button with his/her thumb easily. Also, the link-button may be formed in any position that makes it easy to press the link-button with user's other fingers.

The link-button is a kind of physical user interface (PUI). The command to join the network may be input through any other PUI means. For example, the command may be input by touching a touch display or a touch pad.

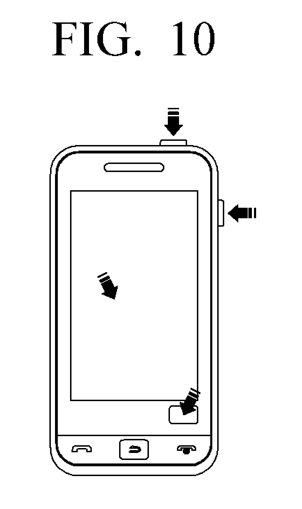

FIG. 10 illustrates that the command to join the network can be input by pressing buttons in various positions or touching a touch display.

The technical idea of the present invention may be applied to various devices, as will be descried below. Among the devices, a device comprising a body and a controller to control the body may be supposed. A representative example of such a device is a television (TV). The TV comprises a body and a controller to control the body. In this case, a PUI used to input a command to join the body of the TV to a network may be provide on a remote controller. Also, the PUI to input the command to join the network may be provided on the body.

Also, the command to join the network may be input through a GUI or by gesture or sound instead of the PUI.

### (2) Designating a mobile phone as a host.

In the above embodiments, the mobile phone the link-button of which is pressed first serves as a host. However, this is merely an example. The mobile phone to serve as a host may be limited. Accordingly, even if the link-button is pressed first, the mobile phone may not be allowed to serve as a host because of a low level system specification.

### (3) A point of time when a guest joins a network

In the above embodiments, only while the user of the host mobile phone is pressing the link-button, another mobile phone is allowed to join the network as a guest. However, this is merely an example.

For example, 1) the guest is allowed to join the network at any time as long as the network exists, 2) the guest is allowed to join the network during a predetermined time after the user presses the link-button, 3) the guest is allowed to join the network until an extra command to block is input by the user, or 4) the guest is not allowed to join the network if the number of guests joining the network reaches a predetermined number.

### (4) Group of mobile phones

In the above embodiments, a mobile phone joins as a guest a network in which another mobile phone of the same group serves as a host, or only a mobile phone of the same group as that of a host mobile phone is allowed to join a network. However, this is merely an example.

A mobile phone may join as a guest a network in which a mobile phone of a relevant group serves as a host, even though the group of the host mobile phone is not the same as that of the guest mobile phone, or a mobile phone of a relevant group is allowed to join a network, even though the group of the mobile phone is not the same as that of a host mobile phone.

### (5) Joining a network in which a mobile phone of a different group is a host

Even a mobile phone which does not belong to the same group as that of a host may be allowed to join a network as a guest. In this case, the mobile phone may be temporarily allowed to join the network and the number of mobile phones of a different group to be allowed as guests may be limited.

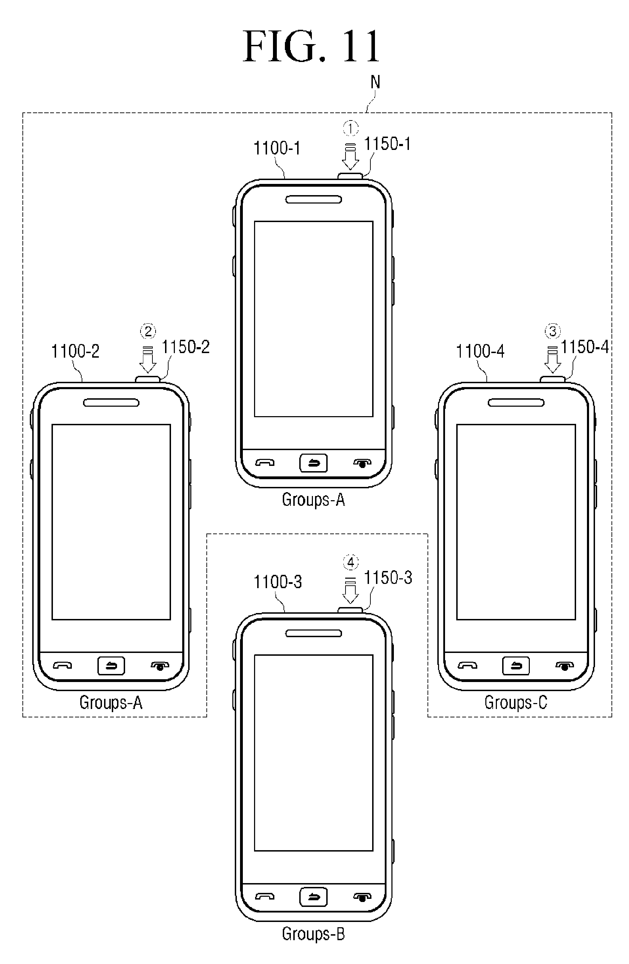

According to circled characters in FIG. 11, a mobile phone 1100-1 serves as a host since its link-button 1150-1 is pressed first. After that, among mobiles phones 1100-2, 1100-3, and 1100-4 link-buttons of which are pressed afterward, the mobile phone 1100-2 is allowed to join as a guest a network N in which the mobile phone 1100-1 serves as the host, since the mobile phone 1100-2 belongs to the same group A as that of the host mobile phone 1100-1.

The mobile phone 1100-4 belongs to a group C that is different from the group of the host mobile phone 1100-1, but it is allowed to join the network N. However, the mobile phone 1100-3 belonging to a group B that is different from the group of the mobile phone 1100-1 is not allowed to join the network N.

This is because the number of mobile phones of a different group to be allowed to join the network as a guest is limited to 1. Accordingly, only the mobile phone 1100-4 the link-button of which is pressed earlier is allowed to join the network N and the mobile phone 1100-3 the link-button of which is pressed afterward is not allowed to join the network N.

Also, a mobile phone which does not belong to the same group as that of a host may be allowed to join a network after going through user's verification. However, this is based on the premise that the host of the network sets a mobile phone of a different group to be able to join the network as a guest before forming the network.

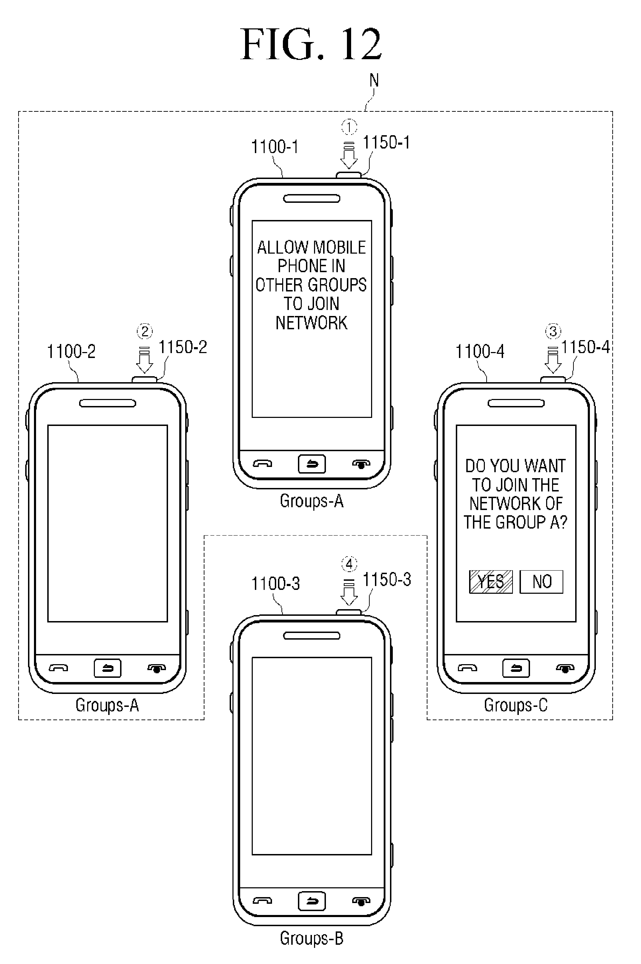

As shown in FIG. 12, the host mobile phone 1100-1 displays a message informing that a mobile phone of a different group is allowed to join the network.

Also, the mobile phone 1100-4 displays a message questioning a user on whether the user wishes to join the network of the group A to which the mobile phone 1100-4 does not belong.

### (6) Joining a network based on priority

A mobile phone may select a network to join as a guest based priority of groups set in the mobile phones. For example, it is assumed that a mobile phone belongs to groups A and B and priority of the group A is higher than that of the group B.

In this case, if a network formed by mobile phones belonging to the group A coexists with a network formed by mobile phones belonging to the group B, the mobile phone joins the network formed by the mobile phones belonging to the group A of higher priority.

If only the network formed by the mobile phones belonging to the group B exits around the mobile phone, the mobile phone joins the network formed by the mobile phones of the group B of the next higher priority, since there is no network formed by the mobile phones belonging to the group A.

Also, a mobile phone may determine a property (type) of a network that it will join as a host based on priority of groups set in the mobile phone. For example, it is assumed that a mobile phone belongs to groups A and B and priority of the group A is higher than that of the group B. In this case, if a command to join a network is input by a user, the mobile phone forms a network with the mobile phones belonging to the group A of the higher priority and joins the network as a host.

### (7) Host-dedicated mobile phone & guest-dedicated mobile phone

In the above embodiments, mobile phones may join a network as a host or a guest. However, the mobile phones may be divided into a host-dedicated mobile phone and a guest-dedicated mobile phone.

The host-dedicated mobile phone is allowed to join a network as a host only. In other words, the host-dedicated mobile phone is not allowed to join a network as a guest. Accordingly, the host-dedicated mobile phone does not join a network if there is a host belonging to the same group, and joins the network as a host if there is no host belonging to the same group.

The guest-dedicated mobile phone is allowed to join a network as a guest only. In other words, the guest-dedicated mobile phone is not allowed to join a network as a host. Accordingly, the guest-dedicated mobile phone joins a network if the network is formed by a host belonging to the same group, but does not join a network as a guest if the network is not formed by the host belonging to the same group.

Also, a host link-button to command a mobile phone to join a network as a host only and a guest link-button to command a mobile phone to join a network as a guest only may be provided on the mobile phone. If the host link-button is pressed by the user, the mobile phone is operated as the host-dedicated mobile phone. On the other hand, if the guest link-button is pressed by the user, the mobile phone is operated as the guest-dedicated mobile phone.

### 8. Device to which the present invention is applicable

In the above embodiments, mobile phones form a network. However, the present invention may be applied to any other devices besides the mobile phone. For example, the present invention may be applied to portable devices such as MP3 players, head-set, digital cameras, digital camcorders, and portable personal computers (PCs), and stationary type devices such as table-top devices, electronic albums, IP-TVs, and desk top PCs.

Also, all devices forming a network are not necessarily homogenous. Heterogeneous devices may form a network.

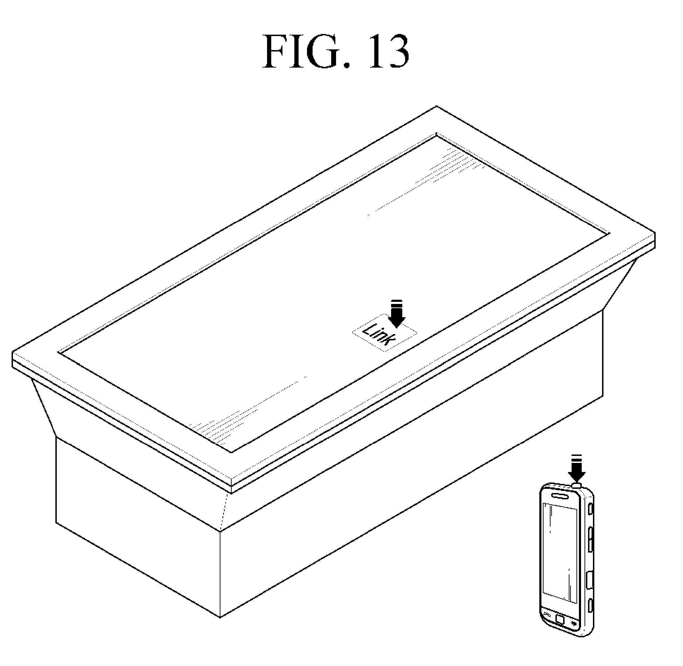

FIG. 13 illustrates a table-top device and a mobile phone used in a digital conference to explain that they can be used to form a network according to an exemplary embodiment.

In FIG. 13, a command to instruct the table-top device to join a network is input by touching a link-icon displayed on a touch display.

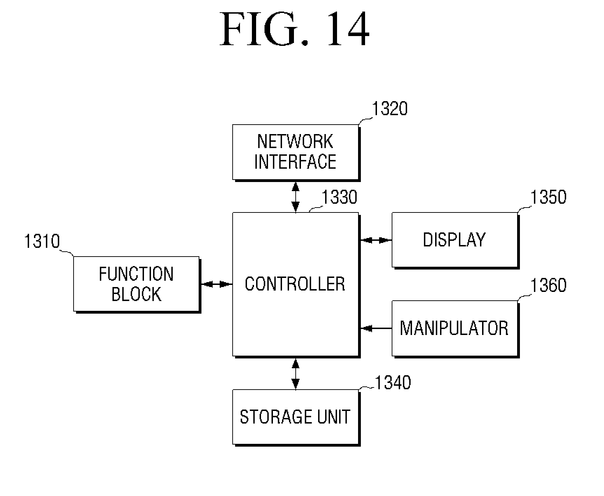

FIG. 14 is a block diagram illustrating a device to which the present invention is applicable. As shown in FIG. 14, the device comprises a function block 1310, a network interface 1320, a controller 1330, a storage unit 1340, a display 1350, and a manipulator 1360.

The function block 1310 performs an original function of the device. If the device is a mobile phone, the function block 1310 performs a mobile phone function, and, if the device is a table-top device, the function block 1310 performs a function necessary for the digital conference.

The network interface 1320 accesses a network formed with surrounding devices and communicates with the surrounding devices. Also, the storage unit 1340 is a storage medium that stores files, contents, and data used for performing a service.

The display 1350 displays a result of performing the function by the function block 1310 and also displays a GUI and a guide message necessary for realizing the present invention.

The manipulator 1360 is a means for inputting a user command and the link-button mentioned in the above embodiments is provided on the manipulator 1360.

Also, the controller 1330 performs the operations illustrated in FIG. 9 and controls the device to join a network as a host or a guest.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method for joining a network of a device, the method comprising:
determining whether a command to join a network is input by a user; and
if it is determined that the command to join a network is input, joining a network which will be formed along with another device that receives a command to join a network and belongs to a group relevant to a group of the device, among other devices existing around the device.

2. The method as claimed in claim 1, wherein the joining the network comprises, after it is determined that the command to join a network is input and then if it is determined that the another device does not exist around the device, joining the network as a host.

3. The method as claimed in claim 2, wherein the joining the network further comprises:
after the joining the network as the host, detecting another device that receives a command to join a network and belongs to a group relevant to a group of the device among other devices existing around the device; and
allowing the detected another device to join the network as a guest.

4. The method as claimed in claim 3, wherein the detecting and the allowing the another device to join the network as the guest are repeated until a specific time.

5. The method as claimed in claim 4, wherein the specific time is at least one of a time at which input of the command to join a network from the user is released, a time at which a predetermined time elapses, and a time at which a predetermined number of guests joins the network, the predetermined number being equal to or greater than 1.

6. The method as claimed in claim 2, wherein the joining the network further comprises, after the joining the network as the host, allowing another device of a group that has no relevance to a group of the device among other devices existing around the device to join the network as a guest.

7. The method as claimed in claim 2, wherein the joining the network further comprises, after the joining the network as the host, allowing another device of a group that has no relevance to a group of the device among other devices existing around the device to join the network as a guest, wherein a number of the another device is equal to or less than a predetermined number.

8. The method as claimed in claim 1, wherein the another device of the group relevant to the group of the device is a device that belongs to a same group as at least one group of the device.

9. The method as claimed in claim 8, wherein the group of the device is at least one group to which the device belongs or at least one group selected from groups to which the device belongs,
wherein the group of the another device is at least one group to which the another device belongs or at least one group selected from groups to which the another device belongs.

10. The method as claimed in claim 1, wherein the command to join a network is input through at least one of a physical user interface (PUI), a button, touch on a touch display, touch on a touch pad, a graphical user interface (GUI), gesture, and sound.

11. The method as claimed in claim 1, wherein the command to join a network for the device is input by the user, and the command to join a network for the another device is input by another user or the user.

12. The method as claimed in claim 1, further comprising performing a specific service along with the another device connected through the network.

13. The method as claimed in claim 12, wherein the service is performed by a device that serves as a host in the network and comprises at least one of 1) transmitting a file among devices forming the network, 2) playing a game along with the devices, 3) transmitting a screen among the devices, and 4) exchanging data and control information with the devices.

14. The method as claimed in claim 1, wherein the joining the network comprises, after it is determined that the command to join a network is input, if it is determined that another device serving as a host in the network exists around the device, allowing the another device to join the network as a guest.

15. The method as claimed in claim 14, wherein the device serving as the host is a device into which the command to join a network is input first.

16. The method as claimed in claim 14, wherein the group of the device has no relevance to a group of the device serving as the host in the network,
wherein the joining the network as the guest comprises, if it is determined that there is permission from the device serving as the host in the network, joining the network as the guest.

17. The method as claims in claim 1, wherein the joining the network comprises selecting a network to join by referring to priority of a group set in the device.

18. Adevice comprising:
a manipulator which receives a command to join a network from a user;
a network interface which accesses a network which will be formed along with at least one of other devices existing around the device; and
a controller which, if it is determined that the command to join a network is input through the manipulator, controls to join a network which will be formed with another device that receives a command to join a network and belongs to a group relevant to a group of the device among other devices existing around the device.

19. A networking method comprising:
forming a network by devices of relevant groups among devices which receive a command to join a network from a user; and
performing a service by at least two devices among the devices forming the network.
